Europäisches Patentamt

European Patent Office

Office européen des brevets

(11) Veröffentlichungsnummer: **0 075 657**
**B1**

(12) **EUROPÄISCHE PATENTSCHRIFT**

(45) Veröffentlichungstag der Patentschrift: 30.09.87

(21) Anmeldenummer: 82105799.9

(22) Anmeldetag: 30.06.82

(51) Int. Cl.⁴: **B 60 T 13/68** // B60T8/00

(54) Steuervorrichtung für Magnetventile.

(30) Priorität: 29.09.81 DE 3138647

(43) Veröffentlichungstag der Anmeldung:
06.04.83 Patentblatt 83/14

(45) Bekanntmachung des Hinweises auf die
Patenterteilung:
30.09.87 Patentblatt 87/40

(84) Benannte Vertragsstaaten:
DE FR GB IT SE

(56) Entgegenhaltungen:
GB-A-1 595 326
GB-A-2 016 746
US-A-3 637 264
US-A-4 131 325

(73) Patentinhaber: Dr.Ing.h.c. F. Porsche
Aktiengesellschaft
Porschestrasse 42
D-7000 Stuttgart 40 (DE)

(72) Erfinder: Lehmann, Ulrich
Friedhofstrasse 41
D-7251 Weissach (DE)

Courier Press, Leamington Spa, England.

EP 0 075 657 B1

## Beschreibung

Die Erfindung betrifft eine Steuervorrichtung für Magnetventile einer im Oberbegriff des Anspruchs 1 bezeichneten Gattung.

Bei einer derartigen, aus DE—A—19 14 765 bekannten Steuervorrichtung wird ein Ventil durch einen Elektromagnet betätigt, der mit einer Impulsbreitensteuerung betrieben wird. Das Tastverhältnis kann unter dem Einfluß der Steuersignale eines Radsensors zwischen "0", einem Zwischenwert und "unendlich" variieren. Aus der jeweils vorhandenen Impulsbreite ergibt sich die Öffnungszeit des Ventils. Die Summe der Öffnungszeitflächen ist dem Volumenstrom des Durchflußmediums proportional. Die verwendete Impulsfrequenz ist niederer als die Grenzfrequenz des Ventils, die zwischen 20 und 90 Hz liegt. Damit soll gewährleistet werden, daß der Anker des Elektromagneten und der mit ihm verbundene Ventilkörper, die zusammen eine träge Masse bilden, die sich gegen eine Rückstellfeder abstützt, im Rhythmus der aufeinanderfolgenden Impulse betätigbar sind. Der Hub, den der Ventilkörper bei jedem Stromimpuls zurücklegt, ist so groß, daß im Durchflußmedium des Ventils merkliche Druckschwankungen auftreten.

Aus der GB—A 20 16 746 geht ferner ein Drucksteuersystem hervor, welches ebenfalls mit impulsbreitengesteuerten Elektromagnetventilen arbeitet. Die Impulsfrequenz liegt hier jedoch vorzugsweise oberhalb der maximalen Schaltfrequenz des Ventils. Als Impulsfrequenz ist ein Wert von einem KHz angegeben.

Die Aufgabe der Erfindung besteht darin, durch eine geeignete Ausgestaltung der Steuervorrichtung des Magnetventils solche Druckschwankungen zu vermeiden, die insbesondere für die Funktionssicherheit von hydraulischen Bremsanlagen von Nachteil sind.

Als Lösung dieser Aufgabe hat sich überraschenderweise das im Kennzeichen des Anspruchs 1 angegebene Merkmale bestens bewährt. Während man es bisher für unmöglich hielt, ein impulsbreitengesteuertes Magnetventil mit einer Frequenz zu betreiben, die wesentlich höher als die Grenzfrequenz des Ventils liegt, hat es sich nun gezeigt, daß bei geeigneter Abstimmung der Impulsfrequenz auf die Grenzfrequenz des Ventils eine solche Lösung doch realisierbar ist. Ein einzelner Impuls oder auch eine kurz andauernde Impulsfolge ist zwar nicht in der Lage, das Magnetventil zu betätigen. Jedoch ergibt sich bei langer andauernder Impulsbeaufschlagung im Elektromagnet durch einen Integriereffekt eine ausreichend hohe elektromotorische Kraft, um den Anker und Ventilkörper in Bewegung zu setzen. Ihre Verstellbewegung folgt nicht dem Rhythmus der Impulse, sondern ist eine kontinuierlich durchlaufene Wegstrecke, deren Größe der eingestellten bzw. einer Regelabweichung entsprechenden Impulsbreite und der vorgegebenen, konstanten Frequenz proportional ist. Somit werden Druckstöße auf das Durchflußmedium vermieden. Der Durchfluß durch das Ventil und der mit ihm zu steuernde Druck sind feinfühlig einstellbar bzw. bei Einbau des Magnetventils in einen Regelkreis aus Genaueste regelbar. Das Eigenverhalten des Magnetventils, insbesondere dessen Massenträgheit, hat auf die Regelung keinen Einfluß. Das unter dem Einfluß der Hochfrequenzimpulse auftretende leichte Vibrieren des Ventils begünstigt ein reibungsarmes Verstellen.

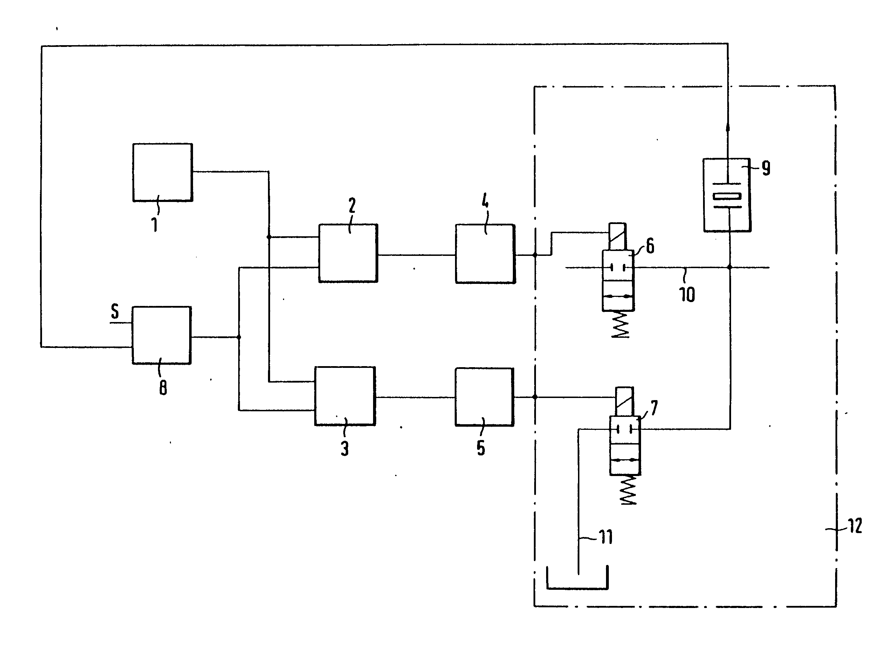

In der Zeichnung ist ein Anwendungsbeispiel der Erfindung bei der Druckregelung einer hydraulischen Bremsanlage im Blockschaltbild dargestellt.

Ein Impulsgenerator 1, der in bekannter Weise als astabiler Multivibrator ausgeführt ist, liefert eine ununterbrochene Impulsfolge mit einer Impulsfrequenz von ca. 400 Hz an zwei Impulsbreitensteuerungen 2 und 3, deren Ausgangssignale in Leistungsverstärkern 4 und 5 so hoch verstärkt werden, da sie zur Ansteuerung der Magnetventile 6 und 7 brauchbar sind. Zur Impulsbreitensteuerung wird eine in der Zeitschrift "Automatisierung", Jahrgang 1957, Heft 11, Seite 12 bis 14, beschriebene Schaltung benutzt, die hier keiner näheren Erläuterung bedarf. An die Eingänge der Impulsbreitensteuerungen 2 und 3 sind zusätzlich die aus einem Differenzverstärker 8 kommenden Drucksignale geführt, die durch Differenzbildung zwischen einem vorgegebenen Sollwert S un einem Istwert des Druckes entstanden sind, wobei der Istwert an einem hinter den Magnetventilen 6, 7 eingebauten Druckgeber 9 ermittelt wird. Da die Impulsbreite der so erzeugten und an die Magnetventile 6, 7 gelangenden Stromimpulse proportional dem hinter den Magnetventilen herrschenden Druck ist, werden diese zu einem entsprechenden Stellweg veranlasst. Die Grenzfrequenz der Magnetventile 6, 7 liegt in diesem Ausführungsbeispiel bei ca. 100 Hz.

Bei positiven Drucksignalen am differenzverstärker 8 wird über die Impulsbreitensteuerung 2 und den Leistungsverstärker 4 das Magnetventil 6 geöffnet und ein der Impulsbreite entsprechender Druck in der Druckleitung 10 aufgebaut, die zum Verbraucher führt. Bei negativen Drucksignalen am Differenzverstärker 8 wird die Impulsbreitensteuerung 3 beaufschlagt, die eine Inverterstufe enthält, so daß die negativen Signale des Differenzverstärkers 8 ebenfalls als positive Signale über den Leistungsverstärker 5 an das zugehörige Magnetventil 7 gelangen. Das Magnetventil 7 wird geöffnet und der Druck wird über die Rücklaufleitung 11 abgebaut.

Die aus der elektronischen Steuerung und dem Hydraulik-Teil 12 bestehende Druckregeleinheit ist sehr einfach aufgebaut. Sie ist kostengünstig herstellbar, weil nur einfache Sitzventile und wenige Elektronikteile benötigt werden und sie hat einen sehr geringen Raumbedarf. Anstatt der Druckregelventile kann die erfindungsgemäße Steuerung auch für andere Stellventile und zur Durchführung anderer Stellbewegungen angewendet werden. Besonders vorteilhaft ist die Anwendung der Erfindung für eine fernsteuerbare Durchflußsteuerung bzw. für eine Drossel, bei der der Durchfluß kontinuierlich entsprechend der eingestellten Impulsbreite veränderbar ist.

**Patentanspruch**

Steuervorrichtung für Magnetventile, insbesondere für Druckregelventile von hydraulischen Fahrzeug-Bremsanlagen, die mit Stromimpulsen von steuerbarer Impulsbreite und konstanter Impuls-Frequenz betätigbar und kontinuierlich verstellbar sind, wobei die Impulsfrequenz höher ist als die sich aus der Masse und Rückstell-Federkonstante der Magnetventile (6, 7) ergebende Grenzfrequenz, dadurch gekennzeichnet, daß die Impulsfrequenz das zwei- bis zehnfache der Grenzfrequenz beträgt.

**Revendication**

Dispositif de commande pour des soupapes magnétiques, notamment pour des régulateurs de pression d'installations de freinage hydrauliques de véhicules qui peuvent être actionnés avec des impulsions de courant dont on peut commander la largeur, et qui peuvent être réglées en continu, la fréquence d'impulsions étant, dans ce cas, supérieure à la fréquence limite résultant de la masse et de la constante de ressort de rappel des soupapes magnétiques (6, 7) ce dispositif étant caractérisé en ce que la fréquence d'impulsions correspond à une valeur comprise entre deux et dix fois la fréquence limite.

**Claim**

A control apparatus for solenoid valves, in particular for pressure regulators of hydraulic vehicle braking units, which can be actuated with current pulses of controllable pulse width and constant pulse frequency and can be continuously varied, the pulse frequency being higher than the limit frequency resulting from the mass and readjusting spring constant of the solenoid valves (6, 7), characterized in that the pulse frequency amounts to between two and ten times the limit frequency.

0 075 657